# FASCICULE DE BREVET EUROPEEN

(11) **EP 1 225 021 B1**
(45) Date de publication et mention de la délivrance du brevet: **03.11.2004**
(21) Numéro de dépôt: 01402961.5
(22) Date de dépôt: 19.11.2001
(51) Int. Cl.: B29C 39/42, B29B 7/84

(54) **Vacuum casting apparatus**
Vorrichtung zum Vakuumgiessen
Dispositif de coulée sous vide

(30) Priorité: 20.11.2000 FR 0014940
(43) Date de publication de la demande: 24.07.2002
(73) Titulaire: AEF Atelier d'Etudes de Formes, 78800 Houilles (FR)
(72) Inventeur: Lesieux, Gérard, 78880 Houilles (FR)
(74) Mandataire: Lavialle, Bruno

(56) Documents cités:
- WO-A-87/06878
- DE-U- 29 921 163
- US-A- 5 275 545

## Description

La présente invention concerne une machine de moulage utilisable par exemple pour la réalisation de pièces à l'unité ou en petite série.

Les machines de moulage de ce type comportent généralement une enceinte pourvue de moyens de mise sous vide et recevant un plateau support de moule, un premier bol monté pour pivoter autour d'un axe horizontal au-dessus du plateau et associé à un mélangeur ayant une extrémité inférieure pourvue d'un élément de brassage et une extrémité supérieure reliée à un arbre de sortie d'un moteur d'entraînement en rotation, et un deuxième bol monté pour pivoter autour d'un axe horizontal au-dessus du premier bol, voir par exemple DE 29921163 U1.

Les procédés de moulage mis en oeuvre par ces machines utilisent des résines polyester, époxydes ou polyuréthanne qui se polymérisent une fois mélangées l'une à l'autre, la polymérisation débouchant sur le durcissement de la totalité du mélange après un temps de réaction propre aux résines utilisées.

Ces procédés consistent à disposer les résines dans les bols, à fermer l'enceinte et à faire le vide dans celle-ci pour permettre le dégazage des résines, à verser le deuxième bol dans le premier bol et à brasser le contenu du premier bol pour mélanger les deux résines dans ce bol, puis à verser le contenu du premier bol dans le moule. L'introduction du mélange dans le moule est réalisée directement par gravité. Le moulage sous vide permet d'obtenir des pièces qui comportent peu de bulles d'air et présentent des caractéristiques mécaniques, géométriques et esthétiques satisfaisantes.

Avec les machines actuelles, un opérateur ne peut intervenir dans l'enceinte de moulage que si l'enceinte est ouverte. Les opérations de versement des bols, qui ont lieu lorsque l'enceinte est sous vide, sont donc réalisées de façon automatique par l'intermédiaire d'automates programmables associés à des moteurs d'entraînement. La programmation des automates est en général réalisée par apprentissage et nécessite de réaliser des pièces de mise au point. La programmation est donc relative longue et engendre des rebuts. En outre, elle doit être recommencée pour chaque nouvelle série de pièces. De plus, dans ces machines, le positionnement des bols est figé de sorte qu'il est nécessaire d'utiliser un entonnoir et une conduite jetables pour amener le mélange du premier bol au moule.

Il serait donc intéressant de disposer d'une machine de moulage en atmosphère confinée qui soit simple et flexible d'utilisation.

Selon l'invention, on prévoit, que le premier bol est monté à une extrémité d'un bras horizontal dont l'extrémité opposée s'étend à l'extérieur de l'enceinte, le bras étant reçu dans un perçage de la paroi de l'enceinte pour pivoter et coulisser de façon étanche autour et le long d'une direction longitudinale du bras, que le moteur est disposé à l'extérieur de l'enceinte et l'arbre de sortie traverse la paroi de l'enceinte et a une extrémité libre dans l'enceinte, et que le mélangeur est monté pour tourner autour d'un axe du premier bol sur une potence solidaire du bras, la deuxième extrémité du mélangeur et l'extrémité libre de l'arbre de sortie étant pourvues de moyens de leur accouplement mutuel en rotation agencés pour permettre un engagement ou un dégagement desdites extrémités par un déplacement relatif desdites extrémités.

Ainsi, un opérateur unique peut, de l'extérieur de l'enceinte, vider le contenu des bols et d'une seule main connecter ou déconnecter le mélangeur et le moteur, et verser le contenu du premier bol. En outre, le risque d'un dysfonctionnement est limité et l'opérateur manipulant directement les bols est à même de s'adapter par exemple à une légère modification de la position du moule.

Avantageusement, le plateau support de moule est monté dans l'enceinte pour pivoter autour d'un premier axe vertical et d'au moins un deuxième axe perpendiculaire au premier axe et est associé à des moyens de commande de son pivotement extérieurs à l'enceinte.

Ainsi, le moule peut être orienté dans l'enceinte de moulage de manière à disposer l'orifice de remplissage du moule directement sous le premier bol et être incliné pour faciliter le remplissage du moule.

Selon un mode de réalisation particulier, l'enceinte possède une paroi cylindrique et réalisée en un matériau transparent.

Ainsi, du fait de la forme cylindrique de la paroi, la différence entre la pression intérieure et la pression extérieure à l'enceinte engendre une contrainte qui s'exerce de façon homogène sur la paroi de l'enceinte. Le matériau transparent permet une bonne visibilité de l'espace intérieur de l'enceinte.

Selon une caractéristique particulière, l'enceinte est divisée en hauteur en au moins deux parties reliées l'une à l'autre par l'intermédiaire de moyens de fixation qui sont aptes à coopérer avec des moyens de fixation correspondants d'une réhausse.

Le volume de l'enceinte peut alors être adapté aux dimensions du moule, ce qui permet de limiter le temps nécessaire pour faire le vide dans l'enceinte.

Il sera fait référence aux dessins annexés, parmi lesquels :
- la figure 1 est une vue schématique en coupe d'une installation de moulage conforme à l'invention,
- la figure 2 est une vue partielle en perspective d'un des bols de résine et du dispositif le supportant dans l'enceinte de moulage,

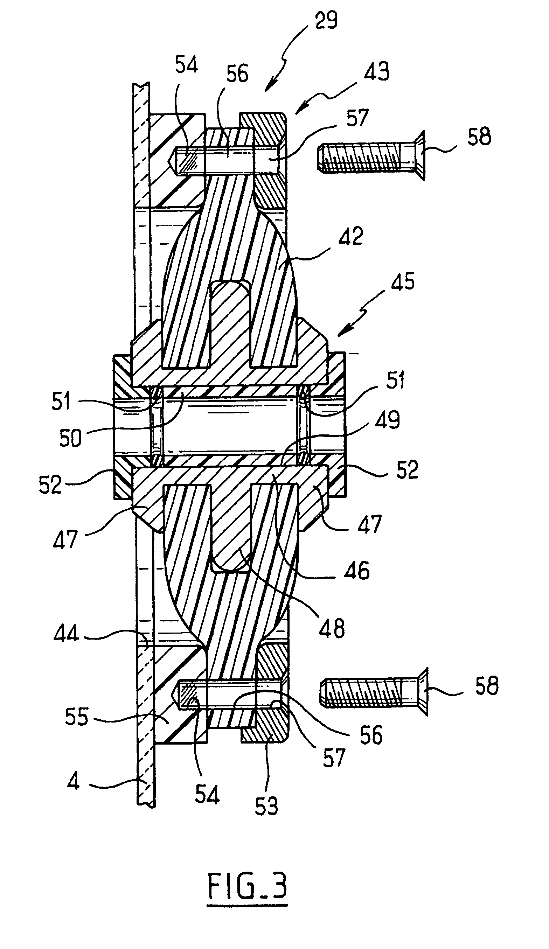

- la figure 3 est une vue en coupe, selon la ligne III-III de la figure 2, d'un palier de guidage,
- la figure 4 est une vue partielle en perspective des moyens de montage dans l'enceinte de moulage du plateau support de moule.

En référence aux figures, l'installation de moulage conforme à l'invention comprend une enceinte de moulage et une enceinte de stockage, respectivement désignées par les références générales 1 et 2, disposées de façon adjacente l'une à l'autre.

L'enceinte de moulage 2 a ici une forme cylindrique mais peut avoir d'autres formes. La forme cylindrique est avantageuse car la différence entre la pression intérieure et la pression extérieure à l'enceinte engendre une contrainte qui s'exerce de façon homogène sur la partie cylindrique de l'enceinte.

L'enceinte de moulage 1 est délimitée par un fond 3, une paroi latérale 4 et une paroi supérieure 5. Les différentes parties de l'enceinte de moulage 1 sont ici associées les unes aux autres par assemblage mais peuvent être réalisées en une seule pièce. La paroi latérale 4 et le fond 3 sont reliés l'un à l'autre par l'intermédiaire de moyens de fixation, ici des collerettes 6, 7 boulonnées, qui sont aptes à coopérer avec des moyens de fixation correspondants d'une rehausse non représentée se présentant sous la forme d'une paroi latérale cylindrique ayant des extrémités pourvues de collerettes analogues à celles de la paroi latérale 4 et du fond 3. La rehausse peut être boulonnées entre le fond 3 et la paroi latérale 4 pour augmenter la hauteur de l'enceinte, ce qui permet de facilement adapter l'enceinte de moulage 1 à recevoir un moule de plus grandes dimensions. D'autres moyens de fixations sont bien entendu envisageables.

La paroi latérale 4 est réalisée en un matériau transparent tel que du polymétacrylate de méthyle et présente une ouverture d'accès associée à un volet d'obturation étanche non représenté.

Les différentes parties de l'enceinte de moulage 1 (y compris le volet d'obturation de l'ouverture d'accès et la rehausse) sont associées les unes aux autres de manière que l'enceinte fermée soit étanche. Cette étanchéité est obtenue par l'intermédiaire de moyens d'étanchéité connus en eux-mêmes tels que des joints en matériau élastomère.

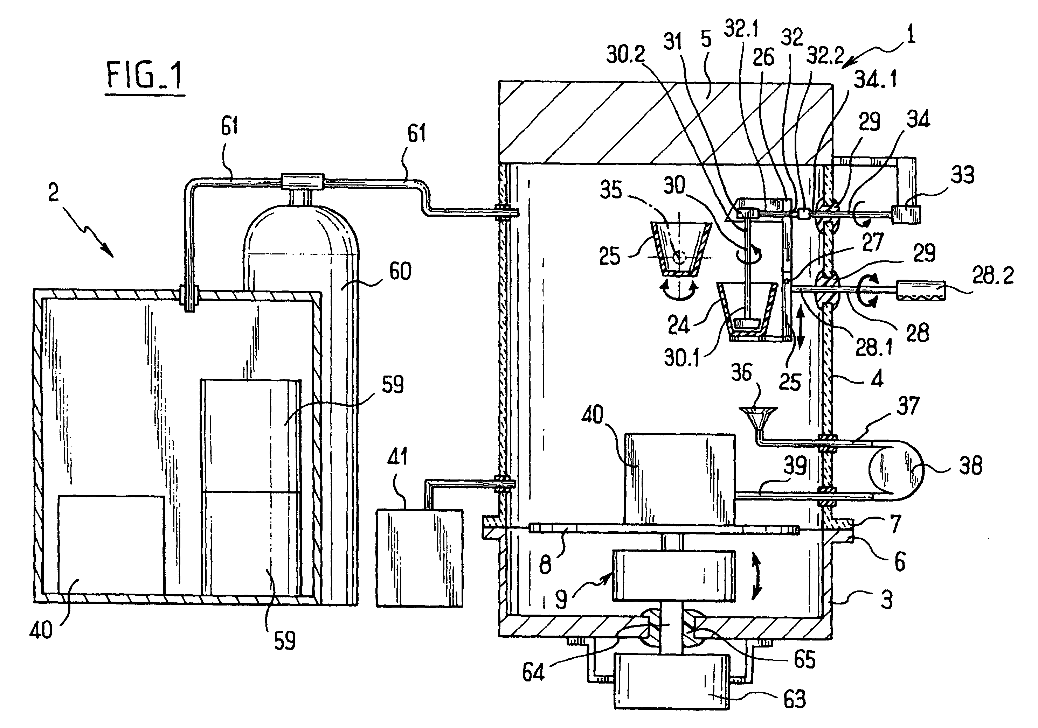

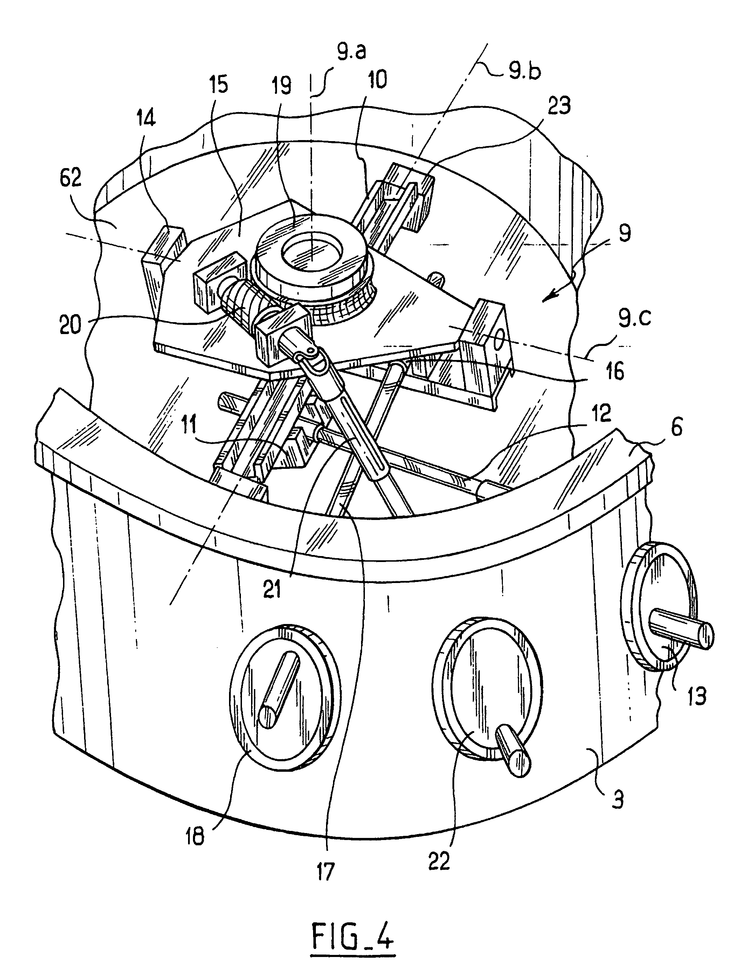

Un plateau 8 est monté sur le fond 3 par l'intermédiaire d'un dispositif de positionnement généralement désigné en 9 (représenté schématiquement à la figure 1 et de façon plus détaillée à la figure 4). Le dispositif de positionnement 9 permet au plateau 8 de pivoter sur 360° autour d'un axe principal de rotation 9.a normal au plateau 8 et selon un débattement angulaire limité autour d'un premier axe secondaire 9.b horizontal et perpendiculaire à l'axe 9.a et d'un second axe secondaire 9.c perpendiculaire aux axes 9.a et 9.b. En variante, on peut prévoir que le plateau ne puisse pivoter selon un débattement angulaire limité qu'autour d'un seul axe.

Le dispositif de positionnement 9 comprend une première armature 10 montée pour pivoter autour de l'axe 9.b sur un berceau 23 solidaire d'une structure support 62 montée sur le fond 3. Une douille 11 est montée sur l'armature 10 de façon excentrée par rapport à l'axe 9.b (ici au-dessous de cet axe) pour pivoter autour d'un axe parallèle à l'axe 9.b. La douille 11 comporte un taraudage d'axe perpendiculaire à l'axe 9.b pour recevoir une extrémité d'une vis de commande 12 dont l'extrémité opposée est associée par l'intermédiaire d'un cardan non représenté à une manivelle 13 montée pour pivoter sur la paroi latérale du fond 3 à l'extérieur de l'enceinte de moulage 1. On comprend que la rotation de la manivelle 13 provoque le vissage ou le dévissage (selon le sens de rotation) de la vis 12 dans la douille 11 engendrant ainsi le pivotement de l'armature 10 autour de l'axe 9.b.

Un berceau 14 est fixé sur l'armature 10 et une deuxième armature 15 est montée sur le berceau 14 pour pivoter autour de l'axe 9.c. Une douille 16 est montée sur l'armature 15 de façon excentrée par rapport à l'axe 9.c (ici au-dessous de cet axe) pour pivoter autour d'un axe parallèle à l'axe 9.c. La douille 16 comporte un taraudage d'axe perpendiculaire à l'axe 9.c pour recevoir une extrémité d'une vis de commande 17 dont l'extrémité opposée est associée par l'intermédiaire d'un cardan non représenté à une manivelle 18 montée pour pivoter sur la paroi latérale du fond 3 à l'extérieur de l'enceinte de moulage 1. On comprend que la rotation de la manivelle 18 provoque le vissage ou le dévissage (selon le sens de rotation) de la vis 17 dans la douille 16 et engendre le pivotement de l'armature 15 autour de l'axe 9.c.

Une roue dentée 19 est montée sur l'armature 15 pour pivoter autour de l'axe 9.a et une vis sans fin 20 est montée sur l'armature 15 pour pivoter autour d'un axe perpendiculaire à l'axe 9.a et engrener avec la roue dentée 19 de manière à entraîner celle-ci en rotation. La vis sans fin 20 est reliée par l'intermédiaire d'un joint d'accouplement 21 à une manivelle 22 montée pour pivoter sur la paroi latérale du fond 3 à l'extérieur de l'enceinte de moulage 1. Afin de ne pas gêner les mouvements de l'armature 15, le joint d'accouplement 21 est agencé pour s'adapter aux déplacements relatifs des éléments auxquels il est relié à savoir la vis sans fin 20 et la manivelle 22. A cet effet, le joint d'accouplement 21 comprend deux cardans, une des fourches d'un des cardans étant reliée à la vis 20 et une des fourches de l'autre cardan étant reliée à la manivelle 22, les deux autres fourches des cardans étant reliées l'une à l'autre par une liaison coulissante. On comprend que la rotation de la manivelle 22 provoque la rotation de la roue dentée 19.

Les manivelles 13, 18, 22 sont montées sur la paroi latérale du fond 3 pour pivoter de façon étanche au moyen de paliers de guidage analogues au palier de guidage 29 décrit ci-après.

Le plateau 8 est fixé sur la roue dentée 19.

Il est possible d'intercaler entre le fond 3 et le plateau 8 un dispositif vibratoire. Le dispositif vibratoire 63 est ici fixé sous le fond 3 à l'extérieur de l'enceinte de moulage 1. La structure support 62 est reliée au dispositif vibratoire par une tige 64 sensiblement verticale traversant le fond 3 et sur une extrémité de laquelle la structure support est fixée, l'extrémité opposée de la tige étant solidaire de l'organe vibrant du dispositif vibratoire 63. La tige 64 est reçue dans un palier de guidage 65 analogue au palier de guidage 29 décrit ci-après. Ce palier permet à la tige de vibrer tout en maintenant l'étanchéité de l'enceinte de moulage 1. Le dispositif vibratoire peut également être disposé entre la roue dentée 19 et le plateau 8.

Un premier bol 24 et un second bol 25 disposés au-dessus du plateau 8 dans l'enceinte de moulage 1 sont montés sur la paroi latérale 4 pour pivoter autour d'un axe horizontal de manière qu'ils puissent être basculés pour pouvoir vider leur contenu.

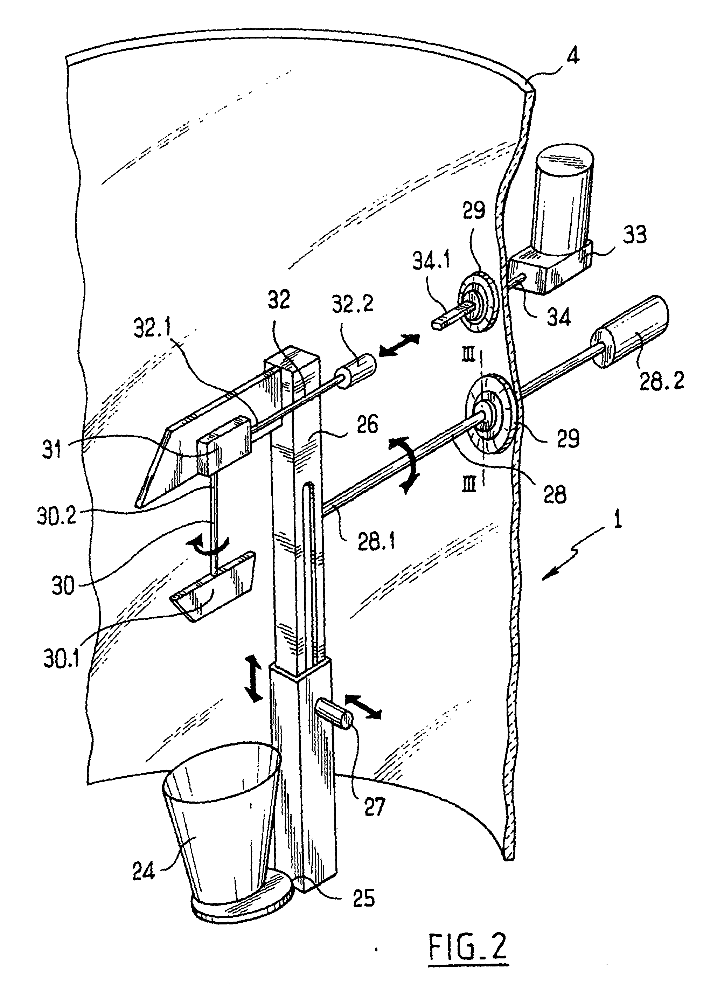

Le premier bol 24 repose sur un élément support 25. L'élément support 25 est monté pour coulisser sur le montant vertical d'une potence 26 entre une position haute (représentée à la figure 1) et une position basse (représentée à la figure 2). L'élément support 25 est maintenu dans sa position haute par l'intermédiaire d'un taquet 27 monté sur l'élément support 25 pour être mobile entre une position verrouillée dans laquelle une de ses extrémités est en saillie pour être reçue dans un logement de la potence et une position déverrouillée dans laquelle cette extrémité est escamotée.

La potence 26 est solidaire d'une extrémité 28.1 d'un bras 28 d'axe horizontal traversant la paroi latérale 4 et dont l'extrémité opposée 28.2 s'étend à l'extérieur de l'enceinte de moulage 1. Le bras 28 est monté sur la paroi latérale 4 pour pivoter et coulisser au travers de celle-ci de manière étanche par l'intermédiaire d'un palier de guidage 29 qui sera décrit ultérieurement. L'extrémité opposée 28.2 est pourvue d'une poignée de préhension.

Le premier bol 24 est associé à un mélangeur 30 monté sur la partie en porte-à-faux de la potence 26 pour tourner autour d'un axe du premier bol 24.

Le mélangeur 30 a une extrémité inférieure 30.1 pourvue d'un élément de brassage (ici des pales) qui plonge dans le bol 24 lorsque l'élément support 25 est en position haute et est dégagée de celui-ci lorsque l'élément support 25 est en position basse, et une extrémité supérieure 30.2 reliée par l'intermédiaire d'un renvoi d'angle 31 fixé sur la partie en porte-à-faux de la potence 26 à une extrémité 32.1 d'un arbre intermédiaire 32 sensiblement horizontal. L'arbre intermédiaire 32 a une extrémité opposée 32.2 destinée à être entraînée en rotation par un moteur 33.

Le moteur 33 est fixé à l'extérieur de l'enceinte de moulage 1 et possède un arbre de sortie 34 parallèle à l'arbre intermédiaire 32 qui traverse la paroi latérale 4 de l'enceinte de moulage 1 par l'intermédiaire d'un palier de guidage en rotation 29 analogue à celui précédemment mentionné et a son extrémité libre 34.1 disposée dans l'enceinte de moulage 1. La distance séparant le bras 28 de l'arbre intermédiaire 32 est sensiblement égale à celle séparant le bras 28 de l'arbre de sortie 34.

L'extrémité 32.2 de l'arbre intermédiaire 32 et l'extrémité libre 34.1 de l'arbre de sortie 34 sont pourvues de moyens de leur accouplement mutuel en rotation qui sont agencés pour permettre un engagement ou un dégagement desdites extrémités par un déplacement relatif de celles-ci. Ici, l'extrémité 32.2 est pourvue d'un logement de section non circulaire correspondant à la section de l'extrémité libre 34.1 de l'arbre de sortie 34 du moteur 33, à savoir ici une section carrée. Ainsi, l'extrémité 32.2 de l'arbre intermédiaire 32 peut recevoir à coulissement selon une direction parallèle à lui-même l'extrémité libre 34.1 de l'arbre de sortie 34 du moteur 33. On remarquera que l'extrémité libre 34.1 de l'arbre de sortie 34 est biseautée pour faciliter son introduction dans le logement de l'extrémité 32.2. Bien entendu, d'autres types de moyens d'accouplement mutuel en rotation de ces extrémités sont envisageables dès lors qu'ils sont agencés pour permettre un engagement ou un dégagement desdites extrémités par un déplacement relatif de celles-ci. En particulier, le logement de l'extrémité 32.2 peut présenter une ouverture latérale de manière que l'extrémité 34.1 puisse être engagée latéralement dans le logement de l'extrémité 32.2 par une rotation du bras 28.

Le deuxième bol 25 s'étend au-dessus du premier bol 24 et est monté à une extrémité d'un bras 35 traversant la paroi latérale 4 au moyen d'un palier de guidage (non visible sur les figures) analogue au palier de guidage 29 et ayant une extrémité opposée (non visible sur les figures) qui s'étend à l'extérieur de l'enceinte de moulage 1 et est pourvue d'une poignée de préhension. Le bras 35 est monté dans le palier au moins pour pivoter autour de son axe et éventuellement pour coulisser le long de celui-ci.

L'enceinte de moulage 1 reçoit également des moyens d'introduction de la résine dans le moule. Ces moyens comprennent ici un entonnoir 36 qui est relié par une conduite 37 traversant la paroi latérale 4 à une pompe péristaltique 38 située à l'extérieur de l'enceinte de moulage 1 et elle-même reliée par une conduite 39 à la partie inférieure du moule 40 reposant sur le plateau 8. Les conduites traversent la paroi latérale 4 par des ouvertures ménagées dans celles-ci et pourvues de moyens d'étanchéité et de préférence par des paliers de guidage 29. D'autres moyens d'introduction de la résine peuvent être simplement constitués par un entonnoir ménagé sur la partie supérieure du moule et relié à la base de l'empreinte par un canal ménagé dans le moule.

De manière classique, l'enceinte de moulage 1 est associée à des moyens d'aspiration, tels qu'une pompe à vide 41, permettant de faire le vide dans l'enceinte de moulage 1 et de maintenir à l'intérieur de celle-ci une pression de l'ordre de 0,5.10 Pa.

Le palier de guidage 29 comprend un corps déformable 42 ayant un pourtour externe pourvu de moyens de sa fixation étanche 43 au bord 44 d'une ouverture ménagée dans la paroi latérale 4 et un noyau 45 tubulaire rigide de guidage qui traverse le corps déformable 42 et est agencé pour recevoir l'élément concerné (à savoir ici les bras 28 et 35, l'arbre de sortie 34, les conduites 37 et 39) de façon étanche à pivotement autour et à coulissement le long de l'axe du noyau.

Le corps déformable 42 est réalisé en un matériau élastiquement déformable tel qu'un élastomère par exemple à base de polyuréthanne et présente de préférence une dureté de l'ordre de 30 à 80 shore A.

Le noyau 45 comprend une pièce tubulaire 46 en un matériau rigide, ici de l'aluminium, qui présente extérieurement des épaulements d'extrémité 47 destinés à s'étendre de part et d'autre du corps déformable 42 et une collerette d'ancrage 48 disposée entre les épaulements d'extrémité et destinée à être enchâssée dans le corps déformable 42. La pièce tubulaire 46 délimite un chambrage interne 49 qui reçoit un tube 50 ayant un diamètre interne légèrement supérieur au diamètre externe de l'élément concerné pour former un logement pour celui-ci et deux joints toriques 51 qui sont disposés de chaque côté du tube 50 et ont un diamètre interne légèrement inférieur au diamètre externe de l'élément concerné. L'ensemble formé par les joints toriques 51 et le tube 50 est maintenu en position par l'intermédiaire d'embouts tubulaires 52 qui sont fixés à chaque extrémité du chambrage interne 49 et ont un diamètre interne égal au diamètre interne du tube 50. Le tube et les embouts tubulaires d'extrémité 52 sont réalisés en un matériau à faible coefficient de friction comme par exemple du polyamide.

Les moyens de fixation 43 comprennent ici une collerette 53 qui vient coiffer le pourtour du corps déformable 42 et se centre sur celui-ci. Des taraudages non débouchants 54 sont réalisés sur le bord 44 de l'ouverture (ou si l'épaisseur de celui-ci n'est pas suffisante, sur une couronne 55 rapportée par soudage ou collage sur ce bord) et des perçages débouchants 56, 57 sont réalisés en correspondance des précédents sur le pourtour du corps déformable 42 et sur la collerette 53. Des vis 58 sont engagées par les perçages 56, 57 dans les taraudages 54 de manière à comprimer le pourtour du corps déformable 42 entre la collerette 53 et la couronne 55.

L'enceinte de stockage 2 doit avoir des dimensions suffisantes pour accueillir un ou plusieurs moules et les pots de résine (référencés respectivement 40 et 59 à la figure 1).

L'enceinte de stockage 2 comprend un absorbeur d'humidité non représenté pour maintenir dans l'enceinte de stockage un faible taux d'humidité avantageusement inférieur à environ 40 % et de préférence inférieur à 15% environ. L'absorbeur d'humidité utilise ici un dessiccant recyclable (ou réactivable) par exemple au moyen d'un passage en étuve.

L'enceinte de stockage 2 est associée également à des moyens de contrôle de la température apte à maintenir dans l'enceinte de stockage une température comprise entre 17 et 25°C environ.

L'installation comprend également un système de balayage des enceintes 1 et 2 par un gaz neutre tel que de l'azote. Ce système comprend une réserve 60 de gaz neutre sous pression et un circuit de distribution de ce gaz dans les enceintes 1 et 2, ici symbolisé par des conduites 61 débouchant dans les enceintes 1 et 2 par des ouvertures ménagées dans les parois de ces enceintes et pourvues de moyens d'étanchéité.

Le procédé conforme à l'invention débute par une étape de déshumidification du moule 40 et des résines 59. Pour ce faire, les moules 40 sont stockés dans l'enceinte de stockage 2 pendant quelques heures préalablement aux opérations de moulage. Les résines doivent également être stockées dans l'enceinte de stockage 2, en particulier lorsque les pots de résine ont déjà été ouverts. Si l'enceinte de stockage 2 n'a pas un volume suffisant pour contenir tous les pots de résine ouverts, il est possible de soumettre les pots ouverts à un balayage d'azote pendant plusieurs heures de telle manière que l'azote prenne la place de l'air dans les pots puis de refermer lesdits pots. Si les résines présentent un taux d'humidité très élevé, l'étape de déshumidification peut être réalisée en soumettant les résines à un pompage sous vide associé à un balayage d'azote.

Lorsque les résines et le moule ont un taux d'humidité suffisamment faible, à savoir inférieur à 40 % et de préférence inférieur à 15 % environ, les opérations de moulage commencent.

Le moulage peut être réalisé soit par gravité soit sous pression. La durée de remplissage du moule dépend notamment de la viscosité des résines, de la surface et de l'épaisseur de l'empreinte du moule. Cette durée comparée au temps de polymérisation du mélange permet de déterminer si le moulage peut être réalisé par gravité ou doit être réalisé par injection sous une pression de l'ordre de 3 à 5 bars.

Le moule 40 fermé est d'abord disposé dans l'enceinte, puis les deux résines sont placées dans les bols 24, 25, le premier bol 24 étant alors en position basse. Le premier bol 24 est ensuite remonté en position haute. Ces opérations sont de préférence effectuées alors que l'enceinte de moulage 1 est balayée intérieurement par un flux d'azote sec de manière à limiter le risque que de l'humidité pénètre dans l'enceinte de moulage 1.

Le volet d'obturation de l'enceinte de moulage 1 est ensuite refermé.

L'enceinte de moulage est alors mise sous vide, c'est-à-dire en dépression par rapport à la pression extérieure.

L'extrémité libre 34.1 de l'arbre de sortie 34 étant reçue dans le logement de l'extrémité 32.2 de l'arbre intermédiaire 32, le moteur 34 est mis en fonctionnement entraînant ainsi le mélangeur 30.

Le deuxième bol 25 est ensuite versé dans le premier bol 24 pour effectuer le mélange des deux résines. Le deuxième bol 25 peut alors être reculé par coulissement du bras 35 dans le palier de guidage qui lui est associé de manière que ce bol 25 ne gêne pas les mouvements ultérieurs du premier bol 24.

Le mélange continue d'être brassé afin de favoriser son dégazage.

Après arrêt du mélangeur 30, l'opérateur fait coulisser le bras 28 de manière à dégager l'extrémité libre 34.1 de l'arbre de sortie 34 du logement de l'extrémité libre 32.2 de l'arbre intermédiaire 32, puis fait pivoter le bras 28 pour verser le contenu du premier bol 24 dans l'entonnoir 36.

On remarquera que l'opérateur peut aisément positionner le premier bol 24 au-dessus de l'entonnoir en faisant coulisser plus ou moins le bras 28 dans le palier de guidage 29. En outre, la déformabilité du corps 42 permet au palier de guidage 29 de se comporter à la manière d'une rotule et autorise un débattement angulaire du bras dans l'ouverture de la paroi latérale 4. On peut par ailleurs prévoir d'autres ouvertures pourvues de paliers 29 dans la paroi latérale 4, par exemple pour permettre le passage d'une tige dont l'extrémité disposée à l'intérieur de l'enceinte de moulage 1 est pourvue d'une pince de préhension et l'extrémité opposée disposée à l'extérieur de l'enceinte de moulage 1 est pourvue d'un élément de commande de la pince.

La pompe 38 injecte le mélange dans le moule 40.

De préférence, le moule est soumis à des vibrations pendant le remplissage. Ces vibrations permettent de décoller les bulles d'air résiduel retenues dans les aspérités du moule et de parfaire le dégazage du mélange. Les vibrations facilitent aussi le remplissage du moule.

L'opérateur peut également incliner le plateau 8 et donc le moule 40 pour faciliter le remplissage complet de celui-ci en actionnant les manivelles 18 et 13. On regroupera de préférence les manivelles 13, 18 et 22 dans une même zone de l'enceinte de moulage 1 de manière que les manivelles soient aisément accessibles par l'opérateur sans déplacement de celui-ci.

A la fin du moulage, l'enceinte de moulage 1 est mise à la pression atmosphérique et le moule 40 est sorti de l'enceinte de moulage 1.

Bien entendu, l'invention n'est pas limitée au mode de réalisation décrit et on peut y apporter des variantes de réalisation sans sortir du cadre de l'invention tel que défini par les revendications.

En particulier, le positionnement du moule et le versement des pots peuvent être réalisés de manière automatique.

L'invention s'applique à toute machine de moulage en atmosphère confinée.

## Revendications

1. Machine de moulage en atmosphère confinée comprenant une enceinte (1) recevant un plateau (8) support de moule (40), un premier bol (24) monté pour pivoter autour d'un axe horizontal au-dessus du plateau et associé à un mélangeur (30) ayant une extrémité inférieure (30.1) pourvue d'un élément de brassage et une extrémité supérieure (30.2) reliée à un arbre de sortie (34) d'un moteur d'entraînement en rotation (33), et un deuxième bol (25) monté sur un bras (35) pour pivoter autour d'un axe horizontal au-dessus du premier bol, **caractérisée en ce que** le premier bol est monté à une extrémité d'un bras horizontal (28) dont l'extrémité opposée s'étend à l'extérieur de l'enceinte, le bras étant reçu dans un perçage de la paroi de l'enceinte pour pivoter et coulisser de façon étanche autour et le long d'une direction longitudinale du bras, **en ce que** le moteur est disposé à l'extérieur de l'enceinte et l'arbre de sortie traverse la paroi de l'enceinte et a une extrémité libre (34.1) dans l'enceinte, et **en ce que** le mélangeur est monté pour tourner autour d'un axe du premier bol sur une potence (26) solidaire du bras, la deuxième extrémité du mélangeur et l'extrémité libre de l'arbre de sortie étant pourvues de moyens de leur accouplement mutuel en rotation agencés pour permettre un engagement ou un dégagement desdites extrémités par un déplacement relatif desdites extrémités.

2. Machine de moulage selon la revendication 1, **caractérisée en ce que** le plateau (8) support de moule (40) est monté dans l'enceinte (1) pour pivoter autour d'un premier axe vertical et d'au moins un deuxième axe perpendiculaire au premier axe et est associé à des moyens de commande de son pivotement extérieurs à l'enceinte.

3. Machine de moulage selon la revendication 1 ou la revendication 2, **caractérisée en ce que** l'enceinte (1) possède une paroi cylindrique (4).

4. Machine de moulage selon l'une quelconque des revendications 1 à 3, **caractérisée en ce que** l'enceinte (1) est réalisée en un matériau transparent.

5. Machine de moulage selon l'une quelconque des revendications précédentes, **caractérisée en ce que** l'enceinte (1) est divisée en hauteur en au moins deux parties (3, 4) reliées l'une à l'autre par l'intermédiaire de moyens de fixation qui sont aptes à coopérer avec des moyens de fixation correspondants d'une réhausse.

6. Machine de moulage selon l'une quelconque des revendications précédentes, **caractérisée en ce qu'**elle comprend des moyens d'injection de la résine dans le moule, ces moyens comportant une pompe péristaltique (38) s'étendant à l'extérieur de l'enceinte (1) et raccordée au moule (40) et à un entonnoir (36) disposé sous le premier bol (24) par l'intermédiaire de conduites (37, 39) traversant la paroi (4) de l'enceinte de façon étanche.

7. Machine de moulage selon l'une quelconque des revendications précédentes, **caractérisée en ce qu'**au moins un des bras (28, 35) supportant les bols est relié à la paroi de l'enceinte par un palier de guidage (29) qui comprend un corps déformable (42) ayant un pourtour externe pourvu de moyens (43) de sa fixation étanche au bord (44) d'une ouverture ménagée dans la paroi (4) et un noyau tubulaire rigide de guidage (45) qui traverse le corps déformable et est agencé pour recevoir de façon étanche le bras de telle manière qu'il ait au moins un degré de liberté dans le noyau de guidage.

8. Machine de moulage selon la revendication 7, **caractérisé en ce que** le noyau (45) présente un passage interne axial agencé pour recevoir le bras (28, 35) à coulissement le long et à pivotement autour de la direction axiale du passage.

## Claims

1. A machine for molding in a confined atmosphere, the machine comprising an enclosure (1) receiving a turntable (8) for supporting a mold (40), a first bowl (24) mounted to pivot about a horizontal axis above the turntable and associated with a mixer (30) having a bottom end (30.1) provided with a stirring element and a top end (30.2) connected to an outlet shaft (34) of a rotary drive motor (33), and a second bowl (25) mounted on an arm (35) to pivot about a horizontal axis above the first bowl, the machine being **characterized in that** the first bowl is mounted at one end of a horizontal arm (28) whose opposite end extends outside the enclosure, the arm being received in a hole through the wall of the enclosure to pivot and to slide in leaktight manner about and along a longitudinal direction of the arm, **in that** the motor is disposed outside the enclosure, and the outlet shaft passes through the wall of the enclosure and has a free end (34.1) inside the enclosure, and **in that** the mixer is mounted to turn about an axis of the first bowl on a bracket (26) secured to the arm, the second end of the mixer and the free end of the outlet shaft being provided with means for mutual coupling in rotation arranged to enable said ends to engage or disengage by relative displacement of said ends.

2. A molding machine according to claim 1, **characterized in that** the turntable (8) for supporting a mold (40) is mounted inside the enclosure (1) to pivot about a first vertical. axis and about at least one second axis perpendicular to the first axis, and is associated with means outside the enclosure for controlling its pivoting.

3. A molding machine according to claim 1 or claim 2, **characterized in that** the enclosure (1) possesses a cylindrical wall (4).

4. A molding machine according to any one of claims 1 to 3, **characterized in that** the enclosure (1) is made of a transparent material.

5. A molding machine according to any preceding claim, **characterized in that** the enclosure (1) is subdivided in the height direction into at least two portions (3, 4) connected to each other via fastener means which are suitable for cooperating with corresponding fastener means of a riser bush.

6. A molding machine according to any preceding claim, **characterized in that** it includes means for injecting resin into the mold, said means comprising a peristaltic pump (38) extending outside the enclosure (1) and connected to the mold (40) and to a funnel (36) disposed beneath the first bowl (24) by pipes (37, 39) passing through the wall (4) of the enclosure in leaktight manner.

7. A molding machine according to any preceding claim, **characterized in that** at least one of the arms (28, 35) supporting the bowls is connected to the wall of the enclosure by a guide bearing (29) which comprises a deformable body (42) having an outer periphery provided with means (43) enabling it to be fastened in leaktight manner to the edge (44) of an opening made through the wall (4), and having a rigid tubular guide core (45) which passes through the deformable body and which is arranged to receive the arm in leaktight manner so that it has at least one degree of freedom in the guide core.

8. A molding machine according to claim 7, **characterized in that** the core (45) presents an axial internal passage arranged to receive the arm (28, 35) to slide along and to pivot about the axial direction of the passage.

## Patentansprüche

1. Gießmaschine in abgeschlossener Atmosphäre, umfassend einen Behälter (1) zur Aufnahme einer Halteplatte (8) für eine Gießform (40), ein erstes Gefäß (24), das um eine horizontale Achse schwenkbar oberhalb der Platte montiert ist und mit einem Mischer (30) in Verbindung steht, der ein mit einem Rührelement versehenes unteres Ende (30.1) und ein mit einer Ausgangswelle (34) eines Drehantriebsmotors (33) verbundenes oberes Ende (30.2) hat, und ein zweites Gefäß (25), das an einem Arm (35) um eine horizontale Achse schwenkbar oberhalb des ersten Gefäßes montiert ist, **dadurch gekennzeichnet, dass** das erste Gefäß an einem Ende eines horizontalen Arms (28) montiert ist, dessen entgegengesetztes Ende aus dem Behälter heraussteht, wobei der Arm in einer Bohrung der Behälterwand abgedichtet um die Längsrichtung des Arms drehbar und längs dieser verschiebbar aufgenommen ist, dass der Motor außerhalb des Behälters angeordnet ist und die Ausgangswelle durch die Behälterwand geht und ein freies Ende (34.1) in dem Behälter hat, und dass der Mischer an einem mit dem Arm fest verbundenen Träger (26) so montiert ist, dass er um eine Achse des ersten Gefäßes rotieren kann, wobei das zweite Ende des Mischers und das freie Ende der Ausgangswelle mit Mitteln zu ihrer gegenseitigen Drehkopplung versehen sind, die so ausgebildet sind, dass die genannten Enden durch eine Verschiebung relativ zueinander in Eingriff miteinander bringbar und voneinander lösbar sind.

2. Gießmaschine nach Anspruch 1, **dadurch gekennzeichnet, dass** die Trägerplatte (8) für die Gießform (40) so in dem Behälter (1) montiert ist, dass sie um eine erste vertikale Achse und zumindest um eine zu der ersten Achse senkrechte zweite Achse schwenkbar ist und mit Betätigungsmitteln verbunden ist, um sie von außerhalb des Behälters zu schwenken.

3. Gießmaschine nach Anspruch 1 oder Anspruch 2, **dadurch gekennzeichnet, dass** der Behälter (1) eine zylindrische Wand (4) hat.

4. Gießmaschine nach einem der Ansprüche 1 bis 3, **dadurch gekennzeichnet, dass** der Behälter (1) aus einem transparenten Material gebildet ist.

5. Gießmaschine nach einem der vorhergehenden Ansprüche, **dadurch gekennzeichnet, dass** der Behälter (1) in der Höhe mindestens in zwei Teile (3, 4) unterteilt ist, die über Befestigungsmittel miteinander verbunden sind, die geeignet sind, mit entsprechenden Befestigungsmitteln einer Erhöhung zusammenzuwirken.

6. Gießmaschine nach einem der vorhergehenden Ansprüche, **dadurch gekennzeichnet, dass** sie Mittel zum Einspritzen von Harz in die Gießform enthält, wobei diese Mittel eine peristaltische Pumpe (38) umfassen, die aus dem Behälter (1) heraussteht und über Leitungen (37, 39), die abgedichtet durch die Wand (4) des Behälters gehen, mit der Gießform (40) und einem unter dem ersten Gefäß (24) angeordneten Trichter (36) verbunden ist.

7. Gießmaschine nach einem der vorhergehenden Ansprüche, **dadurch gekennzeichnet, dass** zumindest einer der die Gefäße haltenden Arme mit der Gehäusewand über ein Führungslager (29) verbunden ist, das einen verformbaren Körper (42) umfasst, der einen Außenumfang, der mit Mitteln (43) zu seiner abgedichteten Befestigung am Rand (44) einer in der Wand (4) ausgebildeten Öffnung versehen ist, und einen starren, rohrförmigen Führungskern (45) hat, der durch den verformbaren Körper geht und ausgebildet ist, den Arm abgedichtet derart aufzunehmen, dass dieser zumindest einen Freiheitsgrad in dem Führungskern hat.

8. Gießmaschine nach Anspruch 7, **dadurch gekennzeichnet, dass** der Kern (45) einen axialen inneren Durchgang hat, der ausgebildet ist, den Arm (28, 35) längs der axialen Durchgangsrichtung verschiebbar und um diese drehbar aufzunehmen.
